# EUROPÄISCHE PATENTANMELDUNG

(11) **EP 1 160 676 A2**
(43) Veröffentlichungstag der Anmeldung: **05.12.2001**
(21) Anmeldenummer: 01111612.6
(22) Anmeldetag: 12.05.2001
(51) Int. Cl.: G06F 13/36, G06F 11/00

(54) **Betriebsverfahren für einen Datenbus für mehrere Teilnehmer**

(30) Priorität: 31.05.2000 DE 10027017
(71) Anmelder: Bayerische Motoren Werke Aktiengesellschaft, 80809 München (DE)
(72) Erfinder: Fröschl, Joachim, 82229 Seefeld (DE); Schedl, Anton, Dr., 80798 München (DE)

(57) **Zusammenfassung**

Bei einem Betriebsverfahren für einen Datenbus für mehrere Teilnehmer wird durch ein zwischen den Teilnehmern und dem Datenbus angeordnetes Schaltglied der Buszugriff für den jeweiligen Teilnehmer nur dann und solange freigegeben, wenn der Teilnehmer senden darf.

## Beschreibung

Die Erfindung bezieht sich auf ein Betriebsverfahren für einen Datenbus für mehrere Teilnehmer. Ein derartiges Verfahren ist aus der WO 99/46892A bekannt. Bei einem derartigen Datenbus kann in einem Teilnehmer ein Defekt auftreten, so daß dieser Teilnehmer öfter als zugelassen, zu unzulässigen Zeitpunkten oder auch ständig auf dem Bus Daten sendet und damit die Busleitung ganz blockiert und dadurch den Datenverkehr stören bzw. zum Erliegen bringen kann.

Bei Datenbussen, die nach den TDMA (Time Division Multiplex Access) Verfahren arbeiten, wie sie im Prinzip aus der US 4866606 A bekannt sind, können sog. BusGuardians eingesetzt werden. Diese Vorrichtungen verfügen über eine eigene Taktversorgung und kennen die Start- und Endezeitpunkte des Sendeslots des zu überwachenden Teilnehmers. Dadurch ist es möglich, durch den Bus-Guardian die Sendeleitung des Teilnehmers nur zwischen Start- und Endezeitpunkt des erlaubten Sendeslots freizuschalten und in der restliche Zeit keinen Buszugriff zuzulassen. Bei einem Fehler im Teilnehmer kann sich also die Störung nur innerhalb des Sendeslots des Teilnehmers auf den ganzen Bus auswirken und nicht in der restlichen Zeit (s. "Specification of the TTP/C Protocol", Specification version 1.0 of 21-Jul-1999, Document edition 1.0 of 21-Jul-1999, Seite 113 ff.). Bedingt durch den aufwendigen Aufbau eines Busguardians erhöht dieser die Gesamtkosten des Datenbusses.

Der Erfindung liegt die Aufgabe zugrunde, ein Betriebsverfahren der eingangs genannten Art zu schaffen, das mit einfachen Mitteln eine Störung des Datenbusverkehrs durch einen defekten Teilnehmer ausschließt.

Die Lösung dieser Aufgabe besteht in einem Datenbus für mehrere Teilnehmer, der die im Patentanspruch 1 angegebenen Merkmale aufweist.

Ein besonderes Merkmal der Erfindung ist darin zu sehen, daß ein Teilnehmer nur dann Zugriff auf den Datenbus hat, wenn er tatsächlich senden möchte und darf. Hierfür ist keine gesonderte Taktsteuerung notwendig.

Eine vorteilhafte Ausgestaltung der Erfindung ist im Patentanspruch 2 angegeben. Es ist lediglich eine Steuereinheit notwendig, die den Bitstromzähler vor dem Sendebeginn des Teilnehmers auf einen definierten Wert vorbelegt, der gleich der maximalen Bitstromlänge der vom jeweiligen Teilnehmer ausgesandten Telegramme ist. Der Teilnehmer kann nun solange senden, wie dies aufgrund des Zählerstands möglich ist.

Eine Weiterbildung hierzu besteht darin, daß die Variation der Buszugriffszeit von der Funktion des Teilnehmers bzw. der maximalen Telegrammlänge des jeweiligen Datenbusses abhängt.

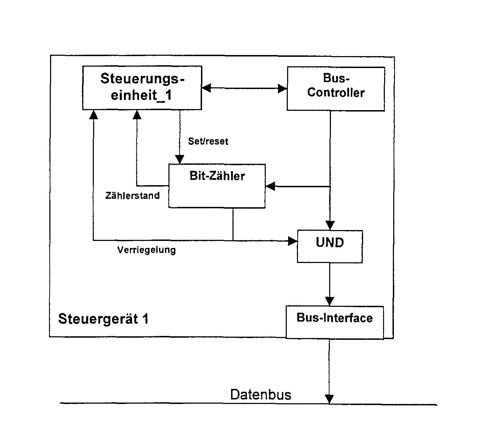

Anhand der einzigen Figur ist die Erfindung weiter erläutert.

Die darin dargestellte Schaltungslogik zur Überwachung und, bei Bedarf zur Unterbrechung eines zu sendenden Bitstroms, besteht im wesentlichen aus einem Zähler und einem Bitstromunterbrecher (z.B. UND Gatter). Der Zähler ist mit einer Steuereinheit verbunden, die den Zählerstand auf einen definierten Wert vorbelegen kann (Set/Reset). Diese Vorbelegung kann zyklisch, aber auch ereignisgesteuert erfolgen.

Wahlweise kann der Zähler mit einer zweiten - bei Bedarf unabhängigen - Steuereinheit verbunden werden (nicht dargestellt). Dadurch ergibt sich die Möglichkeit, daß diese zweite, unabhängige Steuereinheit den Sendebitstrom der ersten Steuereinheit überwacht. Diese Implementierungsart ist v.a. für Steuergeräte mit zwei Mikroprozessoren und integriertem Überwachungskonzept (sicherheitskritische Systeme wie beispielsweise E-Gas, DSC...) von Vorteil.

Der Zähler liefert ein Ausgangssignal, welches den Bitstromunterbrecher steuert (Bitstrom ein/aus). Dieses Ausgangssignal kann optional an die Steuereinheit geführt werden, z.B. für Monitoring, Diagnose oder Fehlerspeicherung.

Signalisiert der Zähler mit dem obengenannten Ausgangssignal einen Fehlerfall, kann optional eine Analyse des Bitstroms gestartet werden (z.B. Rücklesen des Bitstroms durch die/eine Steuereinheit).

Optional liefert der Zähler zusätzlich seinen aktuellen Zählerstand an die Steuereinheit, z.B. für Monitoring, Diagnose oder Fehlerspeicherung.

Die Steuerung des Zählers erfolgt durch den Bitstrom, d.h., es werden die Bits des Bitstroms gezählt. Der Bitstrom wird üblicherweise von einem sogenannten Buscontroller generiert und an ein Businterface weitergeleitet.

Der Bitstromunterbrecher kann diskret aufgebaut werden oder wahlweise in den Buscontroller oder das Businterface integriert werden. Die Anordnung des Bitstromunterbrechers kann innerhalb des physikalischen Übertragungsmediums (Busleitung) beliebig erfolgen.

Das Datenbussystem kann entweder intern zur Kommunikation in einem Steuergerät oder extern zwischen mehreren Steuergeräten dienen.

Der Bitstromunterbrecher kann optional zum Unterbrechen des Bitstroms durch Netzwerkdienste verwendet werden. Ein Netzwerkdienst kann beispielsweise das Schlafenlegen eines Steuergeräts sein.

Weiterhin kann der Bitstromunterbrecher für einen Diagnosedienst, welcher aktiv durch eine Diagnosesteuerung (z.B. Tester) initiiert wird, zur Unterbrechung des Datenstroms verwendet werden.

Weiterhin ist eine solche Überwachung ebenso für einen zu empfangenden Bitstrom denkbar (z.B. für einen Überlastschutz).

## Patentansprüche

1. Betriebsverfahren für einen Datenbus für mehrere Teilnehmer, **dadurch gekennzeichnet, daß** durch ein zwischen den Teilnehmern und dem Datenbus angeordnetes Schaltglied der Buszugriff für den jeweiligen Teilnehmer nur dann und solange freigegeben wird, wenn der Teilnehmer senden darf.

2. Betriebsverfahren nach Anspruch 1, **dadurch gekennzeichnet, daß** das Schaltglied ein Bitstromzähler ist.

3. Betriebsverfahren nach Anspruch 1 oder 2, **dadurch gekennzeichnet, daß** das Schaltglied Anpassungsglieder besitzt, durch die die Steuerung der Buszugriffszeit variierbar ist.

4. Betriebsverfahren nach Anspruch 3, **dadurch gekennzeichnet, daß** die Variation der Buszugriffszeit von der Funktion des Teilnehmers und/oder der maximalen Telegrammlänge des zugehörigen Datenbusses abhängt.
